(19) Europäisches Patentamt
European Patent Office
Office européen des brevets

(11) **EP 1 755 948 B1**

(12) **EUROPÄISCHE PATENTSCHRIFT**

(45) Veröffentlichungstag und Bekanntmachung des Hinweises auf die Patenterteilung:
**05.03.2008 Patentblatt 2008/10**

(21) Anmeldenummer: **05746817.5**

(22) Anmeldetag: **13.06.2005**

(51) Int Cl.:
***B64D 10/00*** *(2006.01)*

(86) Internationale Anmeldenummer:
**PCT/CH2005/000329**

(87) Internationale Veröffentlichungsnummer:
**WO 2005/123504 (29.12.2005 Gazette 2005/52)**

(54) **BESCHLEUNIGUNGSSCHUTZANZUG**

ACCELERATION-PROTECTION SUIT

COMBINAISON DE PROTECTION CONTRE LES ACCELERATIONS

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **18.06.2004 CH 10322004**

(43) Veröffentlichungstag der Anmeldung:
**28.02.2007 Patentblatt 2007/09**

(73) Patentinhaber: **LSS Life Support Systems AG**
**8152 Glattbrugg (CH)**

(72) Erfinder: **REINHARD, Andreas**
**CH-8001 Zürich (CH)**

(74) Vertreter: **Salgo, Reinhold Caspar**
**Dr. R.C. Salgo + Partner,**
**Patentanwälte AG,**
**Rütistrasse 103**
**8636 Wald ZH (CH)**

(56) Entgegenhaltungen:
**GB-A- 881 643          US-A- 5 003 630**
**US-A- 5 997 465          US-B1- 6 290 642**

**Beschreibung**

Die vorliegende Erfindung betrifft einen Beschleunigungsschutzanzug nach dem Oberbegriff des Anspruches 1.

Beschleunigungsschutzanzüge sind im Grunde bekannt und funktionieren in der Regel nach dem hydrostatischen Auftriebsprinzip oder werden mit Druckluft beaufschlagt. In beiden Fällen wird so ein Aussendruck aufgebaut, welcher auf den Träger wirkt und durch die Beschleunigungskräfte hervorgerufene hydrostatische Drucke im Körper des Trägers kompensiert. Der in EP 983 193 offenbarte G-Anzug besteht im Wesentlichen aus einer dehnungsarmen Textilie, in welcher Adern verlaufen, die mittels Luft mit Druck beaufschlagt werden können. Durch die Druckbeaufschlagung verändert sich der Querschnitt der Adern derart, dass die dehnungsarme Textilie um den Körper gespannt wird und so auf den Träger einen gegenüber dem Umgebungsdruck erhöhten Aussendruck ausübt.

Der vorliegenden Erfindung am nächsten kommt US 6 290 642 B1, die alle Merkmale des Oberbegriffs des Anspruchs 1 offenbart.

Die Spannung des G-Anzuges vermag zwar auf den Träger wirkende G-Belastungen zu kompensieren, hat aber zur Folge, dass der G-Anzug in diesem Moment äusserst eng anliegt. Da der Träger einerseits durch die G-Kräfte und andererseits durch den G-Anzug belastet wird, befindet er sich mindestens körperlich in einer Stresssituation. Ein gestresster Körper tendiert dazu, sich zu erwärmen und zu schwitzen. Der eng anliegende G-Anzug verstärkt diesen Effekt weiter. Weder die zusätzliche Wärme noch die Feuchtigkeit können abgeführt werden, wodurch ein für den Träger unangenehmes Wärmeproblem entsteht.

Aufgabe der vorliegenden Erfindung ist es, einen Beschleunigungsschutzanzug mit einem erhöhten Tragekomfort zu offenbaren, welcher im Moment von auftretenden G-Kräften das Wärmeproblem vermeidet.

Die Lösung der Aufgabe ist wiedergegeben im kennzeichnenden Teil des unabhängigen Patentanspruchs hinsichtlich ihrer wesentlichen Merkmale und in den abhängigen Ansprüchen hinsichtlich weiterer vorteilhafter Merkmale.

Der erfindungsgemässe Beschleunigungsschutzanzug, fortan G-Anzug genannt, besteht zu einem wesentlichen Teil aus einem wenig dehnbaren Material, welches in einer äusseren Schicht und einer innerer Schicht angeordnet ist. Zumindest die äussere Schicht umspannt im Wesentlichen, abgesehen von Kopf, Händen und Füssen, den gesamten Körper des Trägers. Die innere und äussere Schicht sind derart miteinander verbunden, dass Adern entstehen. Die Adern sind auf der dem Träger zugewandten Seite mindestens zum Teil gasdurchlässig, oder es werden ihnen in derselben Weise gasdurchlässige Schläuche eingelegt. Der G-Anzug ist so geschnitten, dass er am Träger eng anliegt, die Adern also eine flache Form haben. Werden die Adern, beziehungsweise die Schläuche, mit Druck beaufschlagt, findet einerseits eine Verformung der Adern zu einem in etwa ovalen oder fast runden Querschnitt hin statt. Durch die Verformung der Adern nimmt der Durchmesser quer zu ihrer Längsausdehnung ab. Da mindestens die äussere Schicht des G-Anzuges wenig dehnbar ist und der G-Anzug bereits am Körper anliegt, spannt er sich zusehends mit abnehmendem Durchmesser der Adern. Die Spannung im G-Anzug wird vom Träger als ein von aussen wirkender Druck wahrgenommen. Dieser Druck kann dazu verwendet werden, den durch G-Belastungen hervorgerufenen hydrostatischen Druck in den Blutgefässen des Trägers zu kompensieren. Andererseits beginnt Luft, oder ein anderes Druckgas, aus den gasdurchlässigen Teilen der Adern oder Schläuche zu strömen. Dieser Luftstrom kann zur Klimatisierung des Trägers benutzt werden. Beide Effekte, die Kompensation von G-Belastungen und die Klimatisierung des Körpers, erfolgen somit im Wesentlichen zusammen. Damit ist ein System geschaffen, welches den Körper nicht nur schützt, sondern in dieser Stresssituation auch klimatisiert, was in den meisten Fällen eine Kühlung sein wird. Da die zunehmenden Spannungen im G-Anzug mit einem zunehmenden Druck in den Schläuchen einhergehen, wird gleichzeitig auch die Klimatisierung verstärkt, da bei einem erhöhten Druck auch mehr Luft durch die gasdurchlässigen Teile der Adern oder Schläuche abfliesst.

Anhand der folgenden Figuren wird der erfindungsgemässe G-Anzug im Detail erklärt.

Es zeigen

Fig. 1a, b      schematischer Querschnitt durch eine Ader eines ersten Ausführungsbeispiels in Ruhestellung,

Fig. 2      schematischer Querschnitt durch eine Ader eines zweiten Ausführungsbeispiels in Betriebsstellung,

Fig. 3a bis c      schematische Querschnitte durch eine Ader eines dritten Ausführungsbeispiels,

Fig. 4      schematischer Querschnitt durch eine Ader eines vierten Ausführungsbeispiels,

Fig. 5      schematischer Querschnitt durch eine Ader eines fünften Ausführungsbeispiels,

Fig. 6      schematischer Längsschnitt durch einen Schlauch,

Fig. 7 und 8      zwei erste Ausführungsform von Öffnungen in einem Schlauch in schematischen Darstellungen,

Fig. 9a, b    eine zweite Ausführungsform von Öffnungen in einem Schlauch in schematischen Darstellungen,

Fig. 10    einen G-Anzug mit Adern in schematischer Darstellung.

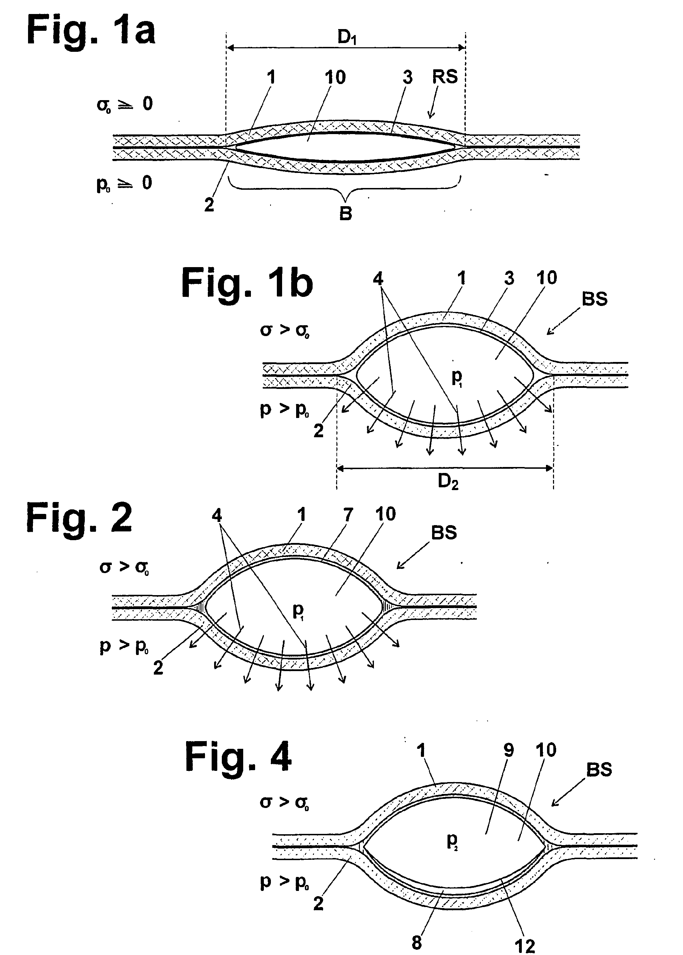

Die Fig. 1a und b zeigen einen Querschnitt durch eine Ader 10 eines G-Anzuges 15. Die Ader 10 wird durch einen Bereich B der äusseren und inneren Schichten 1, 2 gebildet. In diesem Bereich B sind die Schichten 1, 2 nicht miteinander verbunden. Mindestens links und rechts von diesem Bereich sind die Schichten 1, 2 fest miteinander verbunden. Dies kann beispielsweise durch Kleben, Nähen oder Schweissen geschehen. Die Schichten 1, 2 bestehen aus einem wenig dehnbaren Material, wie beispielsweise einer mit Aramidfasern armierten Textilie. Der im Bereich B gebildeten Ader 10 ist ein Schlauch 3 eingelegt. Die Fig. 1a zeigt die Ader 10 mit ihrem Schlauch 3 in Ruhestellung RS. In der Ruhestellung RS hat die Ader 10 einen Durchmesser $D_1$. Die Ader 10 und damit auch der Schlauch 3 sind im Wesentlichen flach und es zirkuliert keine Luft. Der G-Anzug 15 liegt jedoch schon in seiner Ruhestellung RS am Körper an, so dass zumindest in der wenig dehnbaren Schicht 1 eine Vorspannung $\sigma_0 \geq 0$ vorhanden ist. Die Vorspannung $\sigma_0$ entspricht in etwa einer Spannung, die durch das Schliessen von beispielsweise Reiss- oder Klettverschlüssen erzeugt werden kann und zum Glätten von Falten im G-Anzug 15 verwendet werden kann. Der Träger des G-Anzugs 15 empfindet diese Spannung $\sigma_0$ als Druck $p_0 \geq 0$. Die Fig. 1b zeigt eine Ader 10 in Betriebsstellung BS. Der Schlauch 3 ist mit einem Druck $p_1$ beaufschlagt und hat einen im Wesentlichen ovalen Querschnitt angenommen. Die Querschnittsänderung des Schlauches 3 überträgt sich auf die Ader 10, wodurch sich auch diese verdickt und ihr Durchmesser quer zur Längsausrichtung abnimmt und sie nun einen Durchmesser $D_2$ mit $D_2 < D_1$ hat. Damit erhöht sich die Spannung $\sigma$ in der Schicht 1 zu $\sigma > \sigma_0$. Entsprechend verspürt der Träger einen durch den G-Anzug 15 erzeugten Aussendruck von $p \geq p_0$. Mit dem Aussendruck $p$ können durch Beschleunigungskräfte hervorgerufene hydrostatische Drucke im Gefässsystem des Blutkreislaufes kompensiert werden. Durch die Druckbeaufschlagung der Schläuche 3 mit einem Druck $p_1$ beginnt auch die Luft durch die gasdurchlässigen Teile, Öffnungen 4 oder Schlitze 11, der Schläuche 3 zu zirkulieren und den Träger zu klimatisieren. Mit der Erhöhung des Druckes $p_1$ in den Schläuchen 3 wird auch die Zirkulation in den Schläuchen 3 erhöht und der Träger entsprechend klimatisiert. Ein belasteter Körper reagiert zum Überwinden einer Belastung mit einem erhöhten Puls und damit mit einer erhöhten Wärmeproduktion und Transpiration. Die erfinderische Kopplung des Druckes $p_1$ einerseits an die Spannung $\sigma$ und damit an den vom Träger verspürten Aussendruck $p$ und andererseits an die Klimatisierung des Trägers resultiert so in einem Schutzsystem, in welchem die Steuerung eines Parameters, dem Druck $p_1$, genügt, um denden hydrostatischen Druck zu kompensieren und die zusätzliche Körperwärme abzuführen.

Anstelle des Schlauches 3 verfügt die in der Fig. 2 dargestellte zweite Ausführungsform der Ader 10 über eine gasdichte Beschichtung 7 an ihrer Innenseite. Beispielsweise durch Prägen oder Stanzen sind in der Beschichtung 7 Öffnungen 4 angebracht, durch welche die Luft bei Druckbeaufschlagung der Ader 10 zirkulieren kann.

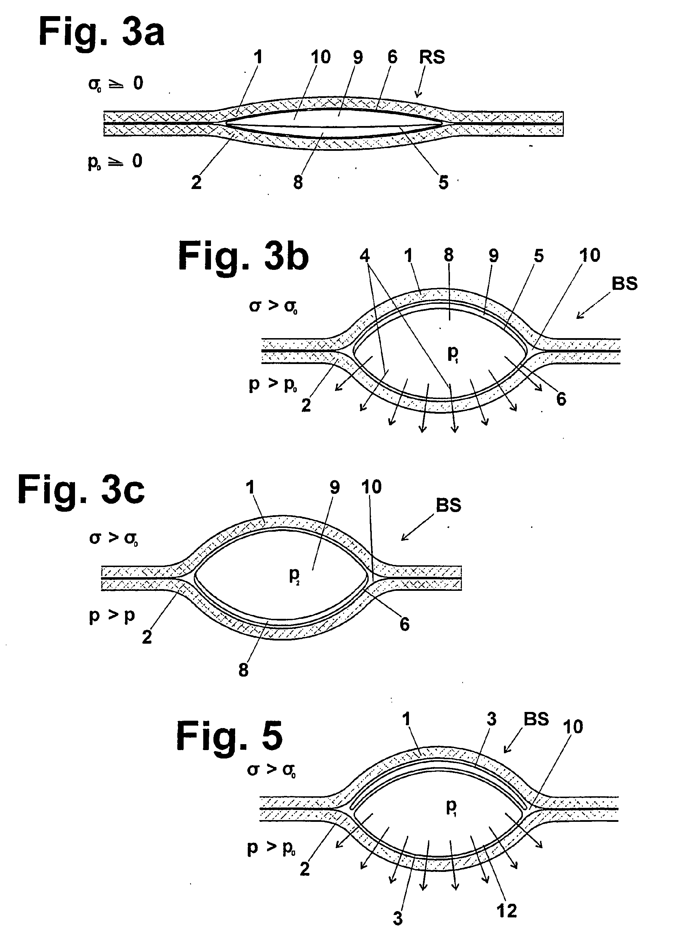

Die Fig. 3a bis c zeigen eine zweite Ausführungsform des erfindungsgemässen G-Anzuges 15. Die in Adern 10 angeordneten Schläuche 6 verfügen über eine innere Trennwand 5, welche in der Längsausdehnung der Schläuche 6 verläuft und das Innere der Schläuche in zwei Kammern 8, 9 teilt. Die erste Kammer 8 entspricht in ihrer Funktion dem Schlauch 3 des ersten Ausführungsbeispiels der Fig. 1a, b. Die erste Kammer 8 liegt auf der dem Körper zugewandten Seite der Trennwand 5 und ist mindestens teilweise zum Körper hin gasdurchlässig. Wird die erste Kammer 8 mit einem Druck $p_1$ beaufschlagt, verformt sie sich, der G-Anzug 15, beziehungsweise die Schichten 1, 2, spannen sich und der Träger verspürt einen Aussendruck $p$. Ebenso wird der Träger durch die gasdurchlässigen Teile der ersten Kammer 8 belüftet und klimatisiert.

Mit den zweiten Kammern 9 wird ein Höhenschutz realisiert. Die zweiten Kammern 9 sind gasdicht und wirken bei einem äusseren Druckabfall, beispielsweise wenn in grosser Höhe der Umgebungsdruck in einem Cockpit aufgrund einer Beschädigung zusammenfällt. Die Kammern 9 können ihre Wirkung grundsätzlich auf zwei verschiedene Arten erreichen. Im ersten Fall werden die Kammern 9 mit einer vorbestimmten Gasmenge, beispielsweise mit Luft, befüllt und gasdicht abgeschlossen. Diese Gasmenge ist so bemessen, dass beim Wegfallen des Aussendrucks in den Kammern 9 ein Druck $p_2$ wirkt, welcher den G-Anzug 15 durch Verformen der Kammern 9 und damit der Ader 10 so spannt, dass auf den Träger ein Druck $p$ ausgeübt wird, der ausreicht, die Stickstoff- und Dampfblasenbildung sowie andere Höhenkrankheitssymptome zu vermeiden. Bei einem höheren Aussendruck oder einem höheren Druck $p_1$ in den ersten Kammern 8 werden die Kammern 9 zusammengedrückt. Im zweiten Fall werden die Kammern 9 erst beim Auftreten eines Druckabfalls wiederum mit einer vorbestimmten Gasmenge befüllt. Vorzugsweise wird diese Gasmenge von einem separaten und unabhängigen System bereitgestellt, beispielsweise von einem am Träger oder G-Anzug 15 befestigten Druckgasspeicher, welcher beispielsweise bei unteschreiten eines vordefinierten Minimaldruckes sein Gas frei gibt. Am wirkungsvollsten arbeitet der Höhenschutz in Kombination mit einem Druckatmungssystem, wie es in Hochleistungsflugzeugen heute standardmässig eingesetzt wird.

Das Ausführungsbeispiel der Fig. 4 zeigt eine Ader 10 mit einer Beschichtung 7, wobei in der Ader 10 eine Membran 12 angeordnet ist. Durch die Membran 12 werden auch in dieser Ausführungsform zwei Kammern 8, 9 gebildet. Die Funktionsweise der beiden Kammern 8, 9 ist dieselbe, wie sie in den Fig. 3a bis c erläutert wurde. Die Fig. 4 entspricht dem in Fig. 3c dargestellten Zustand.

Die Fig. 5 zeigt eine Variante des in den Fig. 3a bis c beschriebenen Ausführungsbeispiels. Anstelle eines Schlauches 6 mit einer Trennwand 5 sind zwei Schläuche 3 in einer Ader 10 angeordnet. Der erste Schlauch 3 hat die Funktion der ersten Kammer 8 und ist mindestens teilweise gasdurchlässig. der zweite Schlauch 3 hat die Funktion der zweiten Kammer 9 und ist gasdicht.

Selbstverständlich können die vorangehenden Ausführungsformen und Varianten des G-Anzugs 15 auch in einem einzelnen G-Anzug 15 kombiniert werden.

Der in den Fig. 3 bis 5 beschriebene Höhenschutz funktioniert auch mit einer ersten Kammer 8 oder einem ersten Schlauch 3, wenn diese beziehungsweise dieser mit einer Flüssigkeit befüllt sind.

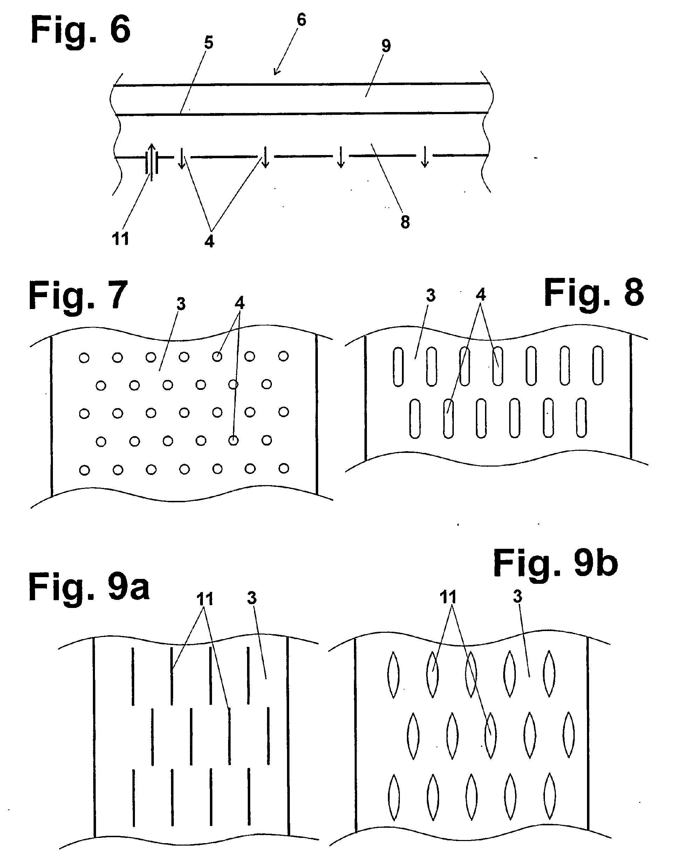

Die Fig. 6 zeigt einen Längsschnitt durch einen Schlauch 6. Im unteren Bereich liegt die erste Kammer 8, im oberen die zweite Kammer 9. Die erste Kammer 8 hat Öffnungen 4, durch welche der Träger klimatisiert wird. Die Luft für den Druckaufbau und die Belüftung wird durch eine Luftleitung 11 zur Verfügung gestellt. Entsprechend zu den Kammern 8, 9 können die Schläuche 3 gestaltet werden, je nach Funktion, die sie übernehmen sollen. Wird die Kammer 9 erst mit Luft befüllt, wenn der Aussendruck wegfällt, beziehungsweise unter einen vorbestimmten Schwellenwert sinkt, verfügen die Kammern 9 über eine eigene Luftleitung 11.

Die Fig. 7 und 8 zeigen Bereiche körperzugewandten Seiten von Schläuchen 3, in welchen Öffnungen 4 vorhanden sind; sinngemäss gilt das auch für die körperzugewandte Seite der ersten Kammern 8 oder einer Ader 10 mit einer gasdichten Beschichtung 7. Die Öffnungen 4 sind einmal kreisförmig und einmal rechteckig dargestellt. Selbstverständlich sind auch andere Formen erfindungsgemäss. Um einen Druckabfall entlang eines Schlauches 3 zu vermeiden, können die Öffnungen 4 mit zunehmendem Abstand von der Luftleitung 11 grösser werden oder ihre Anzahl pro Flächeneinheit vergrössert werden. Beispielsweise kann in der Region der Luftleitung 11 eine Anordnung mit runden Öffnungen 4 gewählt werden. Mit zunehmender Entfernung von der Luftleitung 11 können die Öffnungen 4 in Längsrichtung des Schlauches verlängert werden bis eine Konfiguration in der Art der Fig. 8 erreicht wird. Die Verteilung der Öffnungen 4 braucht nicht regelmässig zu sein, sondern kann in Übereinstimmung mit physiologischen Spezifitäten gebracht werden. Beispielsweise kann die Häufigkeit der Öffnungen 4 zur Mitte oder zu den Rändern der Unterseite des Schlauches 3 hin zunehmen. Die Öffnungen 4 sind so gestaltet, dass sie immer offen sind, selbst wenn keine Luft in den Schlauch 3 gepresst wird. Wird der Schlauch 3 aus einem dehnbaren Material gefertigt und sein Umfang kleiner als der innere Umfang der Ader 10 gewählt, dehnt sich der Schlauch 3 unter Druckbeaufschlagung aus, bis er innen an der Ader anliegt. Damit werden die Öffnungen in Abhängigkeit des Druckes $p_1$ bis zur maximalen Ausdehnung des Schlauches 3 grösser. Wird der Umfang des Schlauches 3 etwa gleich gross wie der innere Umfang der Ader 10 gewählt, dehnt sich der Schlauch 3 bei Druckbeaufschlagung nicht. Insbesondere in dieser Ausführung kann der Schlauch 3 auch aus einem wenig dehnbaren Material gefertigt werden.

Die Fig. 9a, b zeigen eine zweite Ausführungsform von körperzugewandten Seiten von Schläuchen 3, 6. Anstelle der Öffnungen 4 sind hier Schlitze 13 an der Unterseite des Schlauches 3, 6 angeordnet. Die Verteilung und Länge der Schlitze 13 kann wie jene der Öffnungen 4 vorgenommen werden. Jedoch wird in dieser Ausführungsform für den Schlauch 3, 6 ein dehnbares Material benötigt, und in der vom Druck entlasteten Ruhestellung RS hat der Schlauch 3, 6 einen kleineren Umfang als die Ader 10, in welcher er angeordnet ist. In Ruhestellung RS ist der Schlauch 3, 6 zusammengezogen, und die Schlitze 11 sind geschlossen. Erst bei Druckbeaufschlagung des Schlauches 3, 6 beginnen sich die Schlitze zu öffnen, da der Schlauch sich entsprechend dem Druck $p_1$ ausdehnt. Die Ausdehnung wird durch die Ader 10 beschränkt. Eine weitere Drucksteigerung führt zu keiner weiteren Öffnung der Schlitze 13, aber immer noch zu einem erhöhten Luftfluss und einer erhöhten Klimatisierung des Trägers.

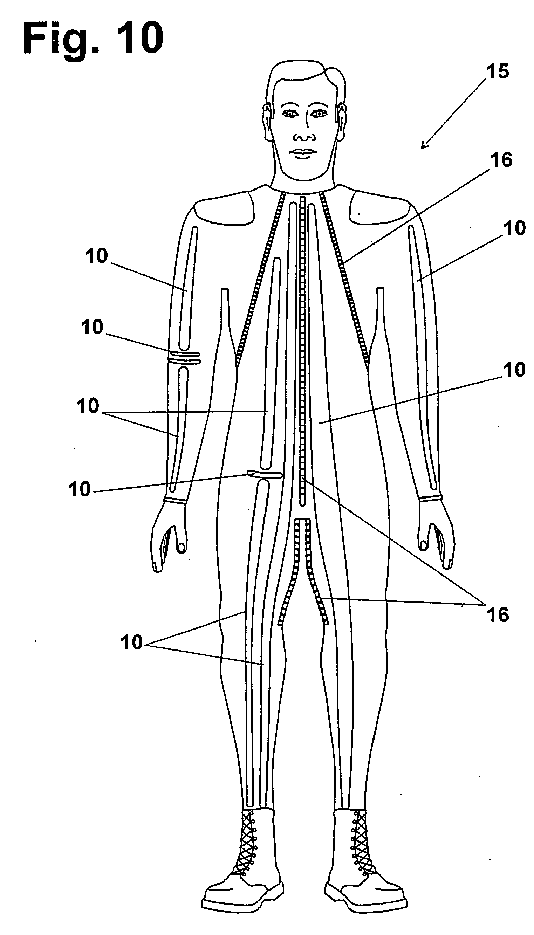

In der Fig. 10 ist in schematischer Weise ein erfindungsgemässer G-Anzug 15 dargestellt. Um die Vorspannungen $\sigma_0$ zu erzeugen, verfügt er beispielsweise über einige Reissverschlüsse 16. Adern 10 sind so im G-Anzug 15 angeordnet, dass sie den G-Anzug 15 im Wesentlichen über die ganze Körperoberfläche verteilt zu spannen vermögen. Die Adern 10 können in verschiedenster Weise angeordnet werden. Beispielsweise können sie in einem Stück über die ganze Länge des G-Anzuges 15 verlaufen oder nur über einen Teil. Bei Gelenken, wie beispielsweise den Ellenbogen und Hüften, können Adern 10 so angeordnet werden, dass sie durch Gelenkbiegungen verursachte Verkürzungen kompensieren können. Ein Schlauch 3, 6 mit einem Umfang $U$ hat in seiner Ruhestellung RS einen Durchmesser von

$$D_{RS} = \frac{U}{2}.$$ In der Betriebsstellung BS kann der Schlauch theoretisch einen runden Querschnitt annehmen, also einen Durchmesser von $D_{min} = \frac{U}{\pi}.$ Mit

$$\frac{D_{min}}{D_{RS}} = \frac{2}{\pi} = 0.64$$ ist klar, dass sich der Schlauchdurchmesser maximal auf etwa 64% seines Durchmessers $D_{RS}$ verkürzt, beziehungsweise sich maximal um etwa 36% verkürzt. Der vom G-Anzug 15 auf den Träger ausgeübte Druck muss nicht überall gleich sein. Beispielsweise nimmt bei Richtungsänderungen der hydrostatische Innendruck im Gefässsystem eines Trägers vom Kopf zu den Füssen hin zu. Ebenso ist darauf zu achten, dass der G-Anzug 15 seinem Träger die Lungen nicht zusammenpresst. Auch variiert der Körperumfang abhängig vom Ort stark. Obschon die Elastizität der Schichten 1, 2 sehr gering ist, ist sie zusammen mit dem Körperumfang zu berücksichtigen. Die vom G-Anzug 15 lokal zu erzeugenden Drucke können mit der Anordnung, der Anzahl und der Breite der Adern berücksichtigt werden. Nicht in der Fig. 10 dargestellt ist das Leitungs- und Ventilsystem für die Druckluftverteilung.

In den Adern 10 des G-Anzuges 15 können Schläuche 3, Schläuche 6 oder zwei Schläuche 3 angeordnet werden. Selbstverständlich ist auch eine Kombination der verschiedenen erwähnten Anordnungen und Ausführungsbeispiele erfindungsgemäss. Ebenso ist es erfindungsgemäss Jacke und Hose des G-Anzuges 15 als getrennte Kleidungsstücke auszuführen. Auch ist im erfinderischen Gedanken eingeschlossen, einen erfindungsgemässen G-Anzug 15 mit Schuhen auszurüsten. Die pneumatischen Komponenten solcher Schuhe vermögen einerseits auf die Füsse eines Trägers Druck auszuüben, andererseits werden die Füsse belüftet.

Beispielsweise können die in den Adern 10 angeordneten Schläuche 3, 6 am ganzen Körper auf ihrer dem Körper zugewandten Seite gasdurchlässig sein, womit der ganze Körper klimatisiert werden kann. Auch können die Schläuche 3, 6 nur im Bereich des Oberkörpers auf ihrer dem Körper zugewandten Seite gasdurchlässig sein, was zu einer teilweisen Klimatisierung führt. Weiter ist es denkbar, nur jene Schläuche 3, 6 pneumatisch zu betreiben, die in Bereichen des G-Anzuges 15 verlaufen, in welchen der Körper auch klimatisiert werden soll. Beispielsweise können Schläuche 3 in den Adern 10 der Arme mit einer Flüssigkeit gefüllt sein. In diesen Adern 10 entsteht der Druck $p_1$ für die Verformung der Adern 10 dann hydrostatisch.

**Liste der Bezugszeichen**

| | |
|---|---|
| 1 | äussere Schicht |
| 2 | innere Schicht |
| 3 | Schlauch |
| 4 | Öffnungen |
| 5 | Trennwand |
| 6 | Schlauch |
| 7 | Beschichtung |
| 8 | erste Kammer |
| 9 | zweite Kammer |
| 10 | Ader |
| 11 | Luftleitung |
| 12 | Membran |
| 13 | Schlitz |
| 14 | |
| 15 | G-Anzug |
| 16 | Reissverschluss |
| B | Ader bildender Bereich |
| RS | Ruhestellung |
| BS | Betriebsstellung |
| D | Durchmesser |

**Patentansprüche**

1. G-Anzug (15) bestehend zumindest aus einer wenig dehnbaren äusseren Schicht (1) mit im Wesentlichen entlang der Körperachse eines Trägers verlaufenden Adern (10), welche sich unter Druckbeaufschlagung derart verformen, dass in der wenig dehnbaren Schicht (1) eine Spannung erzeugt wird, mit welcher auf den Träger ein Druck zur Kompensation der G-Kräfte erzeugt wird und Mittel zum Anziehen und Anpassen des Schutzanzuges an den Träger vorhanden sind, **dadurch gekennzeichnet, dass**

   - mindestens ein Teil der Adern (10) auf ihrer dem Träger zugewandten Seite mindestens stellenweise gasdurchlässig sind, so dass der Träger bei Druckbeaufschlagung der Adern (10) durch das abfliessende Gas klimatisiert werden kann.

2. G-Anzug (15) nach Anspruch 1, **dadurch gekennzeichnet, dass** die Adern (10) auf ihrer Innenseite gasdicht beschichtet sind und in den gasdurchlässigen Bereichen Öffnungen (4) aufweisen.

3. G-Anzug (15) nach Anspruch 1, **dadurch gekennzeichnet, dass** den Adern (10) mindestens ein gasdichter Schlauch (3) eingelegt ist, welcher mindestens stellenweise auf der dem Träger zugewandten Seite gasdurchlässig gestaltet ist.

4. G-Anzug (15) nach Anspruch 3, **dadurch gekennzeichnet, dass** der Umfang des Schlauches (3) im Wesentlichen dem inneren Umfang der Ader (10) entspricht in welcher er angebracht ist.

5. G-Anzug (15) nach Anspruch 3, **dadurch gekennzeichnet, dass** der Umfang des Schlauches (3) kleiner ist als der innere Umfang der Ader (10) in welcher er angebracht ist und der Schlauch (3) aus einem dehnbaren Material besteht.

6. G-Anzug (15) nach Anspruch 5, **dadurch gekennzeichnet, dass** die Schläuche (3) mit Schlitzen (13) versehen sind, welche sich bei Druckzunahme zunehmend öffnen, bis der Schlauch (3) an der Innenseite der Ader (10) anliegt und sich nicht mehr weiter ausdehnen kann.

7. G-Anzug (15) nach einem der vorangehenden Ansprüche, **dadurch gekennzeichnet, dass** die Adern (10) oder die Schläuche (3) mit Öffnungen (4) versehen sind, welche immer offen sind, selbst wenn keine Luft in den Schlauch 3 gepresst wird.

**8.** G-Anzug (15) nach einem der vorangehenden Ansprüche, **dadurch gekennzeichnet, dass** die Öffnungen (4) in den Adern (10) oder den Schläuchen (3) nur bereichsweise vorhanden sind.

**9.** G-Anzug (15) nach einem der Ansprüche 1 bis 7, **dadurch gekennzeichnet, dass** die Öffnungen (4) in den Adern (10) oder den Schläuchen (3) überall auf der dem Träger zugewandten Seite der Adern (10) oder Schläuche (3) vorhanden sind.

**10.** G-Anzug (15) nach einem der vorangehenden Ansprüche, **dadurch gekennzeichnet, dass**

- entweder entlang mindestens eines Teils der Längsausdehnung von Adern (10)

- je zusätzlich mindestens ein zweiter Schlauch (3) angeordnet ist oder,
- ein Schlauch (6) mit zwei Kammern (8, 9) entlang seiner Längsausdehnung angeordnet ist oder,
- wenn die Ader (10) eine Beschichtung (7) aufweist eine gasdichte Membran (12) angeordnet ist, so dass zwei Kammern (8, 9) entlang Längsausdehnung der Ader (10) entstehen,

wobei der zweite Schlauch (3) oder die zweite Kammer (9) gasdicht ist und in der Ader (10) auf der vom Träger abgewandten Seite liegt.

**11.** G-Anzug (15) nach Anspruche 10, **dadurch gekennzeichnet, dass** die erste und die Zweite Kammer (8, 9) von einem Schlauch (6) mit einer im Innern entlang seiner Längsausdehnung verlaufenden Trennwand (5) gebildet werden.

**12.** G-Anzug (15) nach Anspruch 10 oder 11, **dadurch gekennzeichnet, dass** der zweite Schlauch (3) oder die zweite Kammer (9) abgeschlossen und mit einer vorbestimmten Menge Gas befüllt ist.

**13.** G-Anzug (15) nach Anspruch 10 oder 11, **dadurch gekennzeichnet, dass** ein Gasspeicher vorhanden ist, welcher die zweiten Schläuche (3) oder die zweiten Kammern (9) mit einer vorbestimmten Gasmenge befüllt.

**14.** G-Anzug (15) nach Anspruch 12 oder 13, **dadurch gekennzeichnet, dass** bei einem äusseren Druckabfall in grosser Höhe durch die Ausdehnung des Gases in den zweiten Schläuchen (3) oder zweiten Kammern (9) ein Druck auf den Träger ausgeübt wird.

**15.** G-Anzug (15) nach Anspruch 14, **dadurch gekennzeichnet, dass** der auf den Träger wirkende Druck ausreicht, die Stickstoff- und Dampfblasenbildung sowie andere Höhenkrankheitssymptome zu verhindern.

## Claims

**1.** A G-suit (15) consisting at least of a sparingly extensible outer layer (1) with veins (10) running essentially along the bodily axis of a wearer, which deform when pressurized in such a way as to generate a tension in the sparingly extensible layer (1), with which a pressure can be exerted on the wearer to offset the G-forces, and means present for tightening and adjusting the protective suit to the wearer, **characterized in that** at least part of the veins (10) is permeable to gas at least in spots on the side facing the wearer, so that the wearer can be air-conditioned by the exiting gas when the veins (10) are pressurized.

**2.** The G-suit (15) according to claim 1, **characterized in that** the veins (10) are coated gastight on the inside, and have openings (4) in the gas-permeable areas.

**3.** The G-suit (15) according to claim 1, **characterized in that** at least one gastight duct (3) is inlaid in the veins (10), and gas permeable in design at least in spots on the side facing the wearer.

**4.** The G-suit (15) according to claim 3, **characterized in that** the circumference of the duct (3) essentially corresponds to the inner circumference of the veins (10) in which it is incorporated.

**5.** The G-suit (15) according to claim 3, **characterized in that** the circumference of the duct (3) is smaller than the inner circumference of the veins (10) in which it is incorporated, and the duct (3) consists of an extensible material.

**6.** The G-suit (15) according to claim 5, **characterized in that** the ducts (3) are provided with slits (13), which open more and more as pressure increases, until the duct (3) abuts the interior of the vein (10), and can no longer expand further.

**7.** The G-suit (15) according to one of the preceding claims, **characterized in that** the veins (10) or ducts (3) are provided with openings (4), which are always open, even when no air is forced into the duct (3).

**8.** The G-suit (15) according to one of the preceding claims, **characterized in that** the openings (4) in the veins (10) or ducts (3) are only present in areas.

**9.** The G-suit (15) according to one of the claims 1 to 7, **characterized in that** the openings (4) in the veins (10) or ducts (3) are present all over the side of the veins (10) or ducts (3) facing the wearer.

**10.** The G-suit (15) according to one of the preceding claims, **characterized in that**

- at least a portion of the longitudinal expansion of veins (10) has arranged along it

- at least a second duct (3),
- a duct (6) with two chambers (8, 9) is arranged along its longitudinal expansion, or
- if the vein (10) has a coating (7), it exhibits a gastight membrane (12), thereby giving rise to two chambers (8, 9) along the longitudinal expansion of the veins (10),

wherein the second duct (3) or the second chamber (9) is gastight, and lies in the vein (10) on the side facing away from the wearer.

**11.** The G-suit (15) according to claim 10, **characterized in that** the first and second chamber (8, 9) are formed by a duct (6) with a separating wall (5) running inside along its longitudinal expansion.

**12.** The G-suit (15) according to claim 10 or 11, **characterized in that** the second duct (3) or second chamber (9) is sealed and filled with a predetermined quantity of gas.

**13.** The G-suit (15) according to claim 10 or 11, **characterized in that** a gas storage device is present, which fills the second ducts (3) or second chambers (9) with a predetermined quantity of gas.

**14.** The G-suit (15) according to claim 12 or 13, **characterized in that**, given an external pressure drop at a great altitude, the expansion of gases in the second ducts (3) or second chambers (9) exerts a pressure on the wearer.

**15.** The G-suit (15) according to claim 14, **characterized in that** the pressure acting on the wearer is sufficient to prevent nitrogen and steam bubble formation, as well as other altitude sickness symptoms.

## Revendications

**1.** Combinaison anti-g (15) composée d'au moins une couche extérieure peu extensible (1), comportant des côtes (10) s'étendant le long de l'axe corporel d'un utilisateur qui se déforment sous sollicitation par pression de manière à ce que soit générée dans la couche peu extensible (1) une tension grâce à laquelle une pression pour la compensation des forces g est générée sur l'utilisateur et dans laquelle il est prévu des moyens pour enfiler et adapter la combinaison protectrice à l'utilisateur, **caractérisée en ce que**

- au moins une partie des côtes (10) sont au moins par endroits perméables au gaz sur leur face tournée vers l'utilisateur, de sorte que l'utilisateur, en cas de sollicitation par pression des côtes (10), peut bénéficier d'une climatisation par le gaz s'écoulant.

**2.** Combinaison anti-g (15) selon la revendication 1, **caractérisée en ce que** les côtes (10) ont un revêtement hermétique au gaz sur leur face intérieure et présentent des orifices (4) dans les zones perméables au gaz.

**3.** Combinaison anti-g (15) selon la revendication 1, **caractérisée en ce que**, dans les côtes (10), est inséré au moins un tuyau hermétique au gaz (3) qui est réalisé de manière à être perméable au gaz du moins par endroits du côté tourné vers l'utilisateur.

**4.** Combinaison anti-g (15) selon la revendication 3, **caractérisée en ce que** la circonférence du tuyau (3) équivaut sensiblement à la circonférence intérieure des côtes (10) dans lesquelles il est installé.

**5.** Combinaison anti-g (15) selon la revendication 3, **caractérisée en ce que** la circonférence du tuyau (3) est inférieure à la circonférence intérieure des côtes (10) dans lesquelles il est installé et que le tuyau est composé d'une matière extensible.

**6.** Combinaison anti-g (15) selon la revendication 3, **caractérisée en ce que** les tuyaux (3) sont pourvus de fentes (13) qui s'ouvrent progressivement en cas d'augmentation de pression jusqu'à ce que le tuyau (3) touche la face intérieure de la côte (10) et ne puisse plus s'étirer.

**7.** Combinaison anti-g (15) selon une des revendications précédentes, **caractérisée en ce que** les côtes (10) ou les tuyaux (3) sont pourvus d'orifices (4) qui sont toujours ouverts, même lorsque aucun air n'est poussé dans le tuyau (3).

**8.** Combinaison anti-g (15) selon une des revendications précédentes, **caractérisée en ce que** les orifices (4) sont présents seulement par endroits dans les côtes (10) ou les tuyaux (3).

**9.** Combinaison anti-g (15) selon une des revendications 1 à 7, **caractérisée en ce que** les orifices (4) sont présents partout dans les côtes (10) ou les tuyaux (3) sur la face tournée vers l'utilisateur des côtes (10) ou des tuyaux (3).

**10.** Combinaison anti-g (15) selon une des revendications précédentes, **caractérisée en ce que**

- il est disposé chaque fois en plus le long d'au moins une partie de l'extension longitudinale des côtes (10),

- soit au moins un deuxième tuyau (3), soit
- un tuyau (6) à deux chambres (8, 9) le long de son extension longitudinales, soit,
- si la côte (10) comporte un revêtement (7), une membrane hermétique au gaz 12), de sorte que deux chambres (8, 9) sont formées le long de l'extension longitudinale de la côte (10),

le premier tuyau (3) ou la deuxième chambre (9) étant hermétique au gaz et se trouvant dans la côte (10) sur la face détournée de l'utilisateur.

**11.** Combinaison anti-g (15) selon la revendication 10, **caractérisée en ce que** la première et la deuxième chambres (8, 9) sont constituées par un tuyau (6) doté d'une paroi séparatrice (5) s'étendant à l'intérieur le long de son extension longitudinale.

**12.** Combinaison anti-g (15) selon la revendication 10 ou 11, **caractérisée en ce que** le deuxième tuyau (3) ou la deuxième chambre (9) est fermé et rempli d'une quantité prédéfinie de gaz.

**13.** Combinaison anti-g (15) selon la revendication 10 ou 11, **caractérisée en ce qu'**il est prévu un accumulateur de gaz qui remplit les deuxièmes tuyaux (3) ou les deuxièmes chambres (9) d'une quantité prédéfinie de gaz.

**14.** Combinaison anti-g (15) selon la revendication 12 ou 13, **caractérisée en ce qu'**en cas de chute de pression extérieure à une altitude élevée, du fait de la diffusion du gaz dans les deuxièmes tuyaux (3) ou les deuxièmes chambres (9), une pression est exercée sur l'utilisateur.

**15.** Combinaison anti-g (15) selon la revendication 14, **caractérisée en ce que** la pression exercée sur l'utilisateur suffit à empêcher la formation de bulles d'azote et de vapeur ainsi que d'autres symptômes pathologiques dus à l'altitude.

**Fig. 1a**

$\sigma_0 \gtrless 0$

$p_0 \gtrless 0$

$D_1$

1  10  3  RS

2  B

**Fig. 1b**

$\sigma > \sigma_0$

$p > p_0$

4  1  3  10  BS

$p_1$

2

$D_2$

**Fig. 2**

$\sigma > \sigma_0$

$p > p_0$

4  1  7  10  BS

$p_1$

2

**Fig. 4**

$\sigma > \sigma_0$

$p > p_0$

1  9  10  BS

$p_2$

2

8  12

**Fig. 3a**

$\sigma_0 \gtrsim 0$

$p_0 \gtrsim 0$

**Fig. 3b**

$\sigma > \sigma_0$

$p > p_0$

**Fig. 3c**

$\sigma > \sigma_0$

$p > p$

**Fig. 5**

$\sigma > \sigma_0$

$p > p_0$

## Fig. 6

## Fig. 7

## Fig. 8

## Fig. 9a

## Fig. 9b

# Fig. 10

**EP 1 755 948 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 983193 A
- US 6290642 B1